# EUROPÄISCHE PATENTSCHRIFT

(11) **EP 3 120 055 B1**
(45) Veröffentlichungstag und Bekanntmachung des Hinweises auf die Patenterteilung: **21.10.2020**
(21) Anmeldenummer: 15713135.0
(22) Anmeldetag: 04.03.2015
(51) Int. Cl.: F16K 7/12, F16J 3/02

(54) **MEMBRAN UND VERFAHREN ZU DEREN HERSTELLUNG**
DIAPHRAGM AND METHOD FOR THE PRODUCTION THEREOF
MEMBRANE ET PROCÉDÉ SERVANT À LA FABRICATION DE LADITE MEMBRANE

(30) Priorität: 19.03.2014 DE 102014205117
(43) Veröffentlichungstag der Anmeldung: 25.01.2017
(73) Patentinhaber: Gemü Gebr. Müller Apparatebau GmbH & Co. Kommanditgesellschaft, 74653 Ingelfingen (DE)
(72) Erfinder: MUELLER, Gert, 74653 Kuenzelsau (DE); FLOEGEL, Werner, 74677 Doerzbach (DE)
(74) Vertreter: DREISS Patentanwälte PartG mbB
(86) Internationale Anmeldenummer: PCT/EP2015/054528
(87) Internationale Veröffentlichungsnummer: WO 2015/139962

(56) Entgegenhaltungen:
- WO-A2-2006/001971
- DE-A1- 19 925 508
- GB-A- 2 433 298
- US-A1- 2005 115 402

## Beschreibung

Die Erfindung betrifft eine Membran, wobei die Membran mindestens zwei Lagen aufweist, wobei mindestens eine der mindestens zwei Lagen aus einem Elastomer besteht, und wobei zwischen den mindestens zwei Lagen eine elektrische Schaltung vorhanden ist. Die Erfindung betrifft ebenfalls ein Verfahren zur Herstellung der Membran.

Aus der WO 2006/001971 A2 ist eine Vorgehensweise bekannt, um eine Antenne, die zwischen den Lagen einer mehrlagigen Laminatstruktur angeordnet ist, elektrisch nach außen zu verbinden. Die Kontaktierung der Antenne wird dabei mit Hilfe von Öffnungen in der Laminatstruktur erreicht.

DE 199 25 508 A1 betrifft eine Einrichtung zur Erkennung von Undichtheiten an Membranen. Hierzu wird vorgeschlagen, dass die Membran aus wenigstens zwei Membrantellern besteht. Zumindest einer der Membranteller weist auf seiner Innenfläche eine Belegung mit wenigstens einem Leiter auf. Der Leiter bewirkt bei einer Veränderung an der Membran bzw. am Leiter eine Änderung einer Messgröße.

US 2005/0115402 A1 offenbart eine mehrlagige Membran für eine Hydraulikpumpe.

GB 2 433 298 A offenbart eine Membran mit Brucherkennung. In Während des Betriebs einer Membranpumpe werden Kontaktierungspunkte an eine Vorrichtung angeschlossen, welche den elektrischen Strom, welcher durch eine Leiterschleife, ermitteln kann. Damit kann auch ein Widerstand der Leiterschleife ermittelt werden.

Aufgabe der Erfindung ist es, die Membran der eingangs genannten Art im Hinblick auf die elektrische Kontaktierung zu verbessern.

Die Erfindung löst diese Aufgabe durch eine Membran nach dem Anspruch 1 sowie durch ein Verfahren nach dem Anspruch 9.

Bei der erfindungsgemäßen Membran ist innerhalb mindestens einer der mindestens zwei Lagen eine leitfähige Einlage vorhanden, mit der eine elektrische Verbindung der elektrischen Schaltung nach bzw. von außerhalb der Membran erreichbar ist, wobei die elektrische Schaltung eine spiralförmige Struktur zur Bildung einer Antenne aufweist.

Durch die Erfindung werden Öffnungen in den Lagen der Membran vermieden. Stattdessen ist die Kontaktierung der elektrischen Schaltung in die Membran integriert, und zwar in mindestens eine der beiden Lagen der Membran. Auf diese Weise ist es möglich, die Eigenschaften der Membran unverändert zu belassen bzw. nicht durch Öffnungen oder dergleichen zu verändern. Weiterhin wird auch die Herstellung der Membran vereinfacht.

Bei einer Weiterbildung der Erfindung enthält die leitfähige Einlage leitfähige Partikel, die in das Material der betroffenen Lage eingebracht sind. Beispielsweise ist die betroffene Lage an der Stelle bzw. in dem Bereich der leitfähigen Einlage mit kohlenstoffhaltigem Material angereichert. Auf diese Weise wird die Herstellung der Membran weiter vereinfacht.

Weiterhin ist es möglich, dass die leitfähige Einlage aus mindestens einer linienförmigen Leitung besteht. Mit dieser Leitung kann dann die elektrische Verbindung der elektrischen Schaltung nach bzw. von außerhalb der Membran realisiert werden.

Bei einer Weiterbildung der Erfindung ist die elektrische Schaltung auf einem Träger vorhanden, wobei der Träger auf oder zwischen den Lagen angeordnet ist. Vorzugsweise besteht die elektrische Schaltung dabei aus Leiterbahnen und/oder sonstigen elektrischen Strukturen aus einem elektrisch leitfähigen Material, die auf dem Träger angeordnet sind.

Weitere Merkmale, Anwendungsmöglichkeiten und Vorteile der Erfindung ergeben sich aus der nachfolgenden Beschreibung von Ausführungsbeispielen der Erfindung, die in der zugehörigen Figur dargestellt sind.

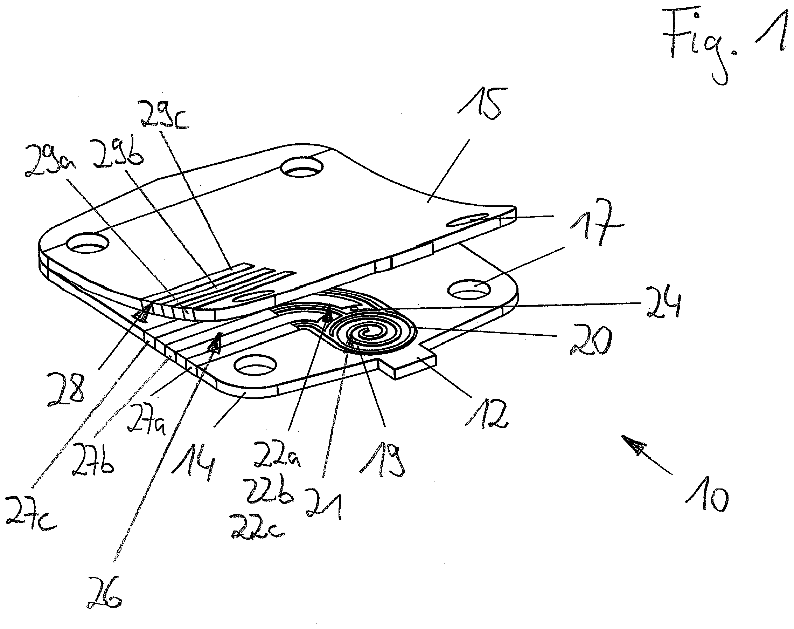

Die einzige Figur 1 zeigt eine schematische Perspektivansicht eines Ausführungsbeispiels einer erfindungsgemäßen Membran.

In der Figur 1 ist eine Membran 10 dargestellt, die insbesondere bei einem Ventil zum Einsatz kommen kann, beispielsweise bei einem pneumatischen oder hydraulischen oder elektrisch betriebenen Membranventil. Die Membran 10 weist in der Draufsicht eine etwa rechteckige Membranfläche auf und besitzt quer zu der Membranfläche eine im Wesentlichen gleichbleibende Membrandicke.

Es versteht sich, dass die Membran 10 auch eine andersartig ausgebildete geometrische Form aufweisen kann. Beispielsweise kann die Membran 10 auch rund ausgeformt sein.

Es wird darauf hingewiesen, dass die Membran 10 in der Figur 1 nur zum Zwecke der Erläuterung derart dargestellt ist, dass eine noch zu erläuternde Decklage teilweise nach oben aufgeklappt ist; bei der fertig hergestellten Membran 10 ist dies jedoch nicht der Fall.

Die etwa rechteckige Membranfläche stellt den Funktionsbereich der Membran 10 dar. Etwa in diesem Funktionsbereich ist die Membran 10 mit dem zugehörigen Ventil verbaut. Beispielsweise kann die Membran 10 innerhalb des Funktionsbereichs zwischen zwei Gehäuseteilen des zugehörigen Ventils angeordnet sein.

An einer der Längsseiten weist die Membran 10 eine Lasche 12 auf. Im vorliegenden Ausführungsbeispiel ist die Lasche 12 als etwa rechteckiger Vorsprung ausgebildet, der über die etwa rechteckige Membranfläche hinaussteht. Die Abmessungen der Lasche 12, insbesondere die Erstreckung der Lasche 12 etwa quer zu der zugehörigen Längsseite der Membran 10, sind dabei derart gewählt, dass die Lasche 12 möglichst auch über gegebenenfalls vorhandene Gehäuseteile des zugehörigen Ventils hinaussteht.

Es versteht sich, dass die Lasche 12 auch eine andersartig ausgebildete geometrische Form aufweisen kann. Gegebenenfalls kann die Lasche 12 auch vollständig entfallen.

Die Membran 10 mit der Lasche 12 ist aus einer Mehrzahl von Lagen aufgebaut, wobei jede der einzelnen Lagen aus einem Elastomer oder einem Gewebe oder einer Stabilisierungslage oder dergleichen bestehen kann, und wobei die Elastomere und die Gewebe der verschiedenen Lagen jeweils aus unterschiedlichen Materialien bestehen können, beispielsweise aus Gummi oder aus Silikon oder dergleichen.

Wie aus der Figur 1 hervorgeht, weist die Membran 10 mindestens zwei Lagen auf, und zwar eine Grundlage 14 und eine Decklage 15. Die beiden Lagen 14, 15 sind deckungsgleich und besitzen beide die etwa rechteckförmige Fläche der Membran 10. Alternativ ist es auch möglich, dass die Flächen der Grundlage 14 und der Decklage 15 voneinander abweichen und sich damit nur teilweise überlappen.

Zur Positionierung der Grundlage 14 und der Decklage 15 zueinander sind beide Lagen 14, 15 jeweils mit mindestens einer Öffnung 17 versehen. Im vorliegenden Ausführungsbeispiel sind jeweils vier Öffnungen 17 vorhanden, die im Bereich der Ecken der Membran 10 angeordnet sind.

Zwischen der Grundlage 14 und der Decklage 15 ist ein Träger 19 vorhanden, der mit einer elektrischen Schaltung 20 versehen ist. Der Träger 19 kann auch auf einer der Lagen angeordnet sein.

Der Träger 19 ist flächig ausgebildet und besitzt eine nur geringe Dicke. Bei dem Träger 19 kann es sich beispielsweise um eine Folie, insbesondere um eine flexible Folie handeln. Der Träger 19 besteht aus einem elektrisch nicht-leitfähigen Material. Der Träger 19 kann die Form der Membran 10 aufweisen. Es ist aber auch möglich, dass die Fläche des Trägers 19 kleiner ist als die Fläche der Membran 10. Insbesondere ist es möglich, dass der Träger 19 nur diejenige Fläche besitzt, die erforderlich ist, um die elektrische Schaltung 20 auf dem Träger 19 unterzubringen.

Bei der elektrischen Schaltung 20 kann es sich beispielsweise um Leiterbahnen und/oder sonstige elektrische Strukturen aus einem elektrisch leitfähigen Material handeln, die auf dem Träger 19 angeordnet sind. Die elektrische Schaltung 20 kann auch Widerstände und/oder Kapazitäten und/oder Induktivitäten enthalten. Dies kann durch eine entsprechende Ausbildung der Struktur und/oder eine entsprechende Materialauswahl der Leiterbahnen erreicht werden. Die elektrische Schaltung 20 kann damit beispielsweise einen Teil einer Antenne und/oder einen Teil einer Messschaltung und/oder dergleichen bilden.

Die elektrische Schaltung 20 ist auf dem Träger 19 angeordnet und fest mit diesem verbunden. Beispielsweise kann die elektrische Schaltung 20 auf den Träger 19 aufgedampft oder in sonstiger Weise fest auf den Träger 19 aufgebracht sein.

Ergänzend wird im Hinblick auf den Träger 19 und die elektrische Schaltung 20 auf sogenannte Flex-Leiterplatten verwiesen, bei denen es sich um dünne, flexible elektrische Schaltungen handelt, die beispielsweise auf Polyimid-Folien aufgebaut sind.

Im vorliegenden Ausführungsbeispiel weist die elektrische Schaltung 20 eine spiralförmige Struktur 21 einer Antenne auf, die mit drei beispielhaften Anschlussleitungen 22a, 22b, 22c versehen ist. Weiterhin besitzt der Träger 19 vorliegend eine Fläche, die nur geringfügig größer ist als die von der spiralförmigen Struktur 21 und den Anschlussleitungen 22a, 22b, 22c gebildete Fläche.

Es versteht sich, dass auch andere Anzahlen der Anschlussleitungen sowie andere flächenhafte Ausprägungen der Struktur 21 denkbar sind.

Im vorliegenden Ausführungsbeispiel wird davon ausgegangen, dass zumindest der der elektrischen Schaltung 20 zugewandte Bereich der Grundlage 14 und/oder der Decklage 15 der Membran 10 elektrisch nicht leitfähig ist. Gegebenenfalls kann dies mit Hilfe einer im Bereich der elektrischen Schaltung angeordneten, nicht-leitfähigen Zusatzlage oder dergleichen erreicht werden.

Zur Positionierung des Trägers 19 auf der Grundlage 14 sind der Träger 19 und die Grundlage 14 jeweils mit mindestens einer Öffnung 24 versehen. Im vorliegenden Ausführungsbeispiel sind jeweils zwei Öffnungen 24 vorhanden, die im Bereich zwischen den drei Anschlussleitungen 22a, 22b, 22c angeordnet sind. Es versteht sich, dass der Träger 19 - anstelle der Grundlage 14 - auch im Hinblick auf die Decklage 15 positioniert werden kann.

Der Träger 19 zusammen mit der elektrischen Schaltung 20 kann mit der Grundlage 14 und/oder der Decklage 15 fest verbunden sein. Dies kann beispielsweise mit Hilfe eines Klebers oder eines sonstigen Materials erreicht werden, der bzw. das zwischen den Träger 19 und die Grund- und/oder Decklage 14, 15 eingebracht wird. Die Fixierung des Trägers 19 innerhalb der Membran 10 kann alternativ aber auch dadurch erfolgen, dass die Grundlage 14 und die Decklage 15 fest miteinander verbunden werden und auf diese Weise auch der Träger 19 fest mit der Grund- und/oder der Decklage 14, 15 verbunden wird bzw. ist.

In der Grundlage 14 ist eine leitfähige Einlage 26 vorhanden, die im vorliegenden Ausführungsbeispiel aus drei linienförmigen Leitungen 27a, 27b, 27c besteht.

Die leitfähige Einlage 26 bzw. jede der linienförmigen Leitungen 27a, 27b, 27c kann dadurch erreicht werden, dass an den erwünschten Stellen bzw. in den erwünschten Bereichen der Grundlage 14 in das Material der Grundlage 14 zusätzliche leitfähige Partikel eingebracht werden. Es erfolgt also genau dort eine Dotierung des Materials der Grundlage 14 mit leitfähigen Partikeln, wo die leitfähige Einlage 26 bzw. die linienförmigen Leitungen 27a, 27b, 27 angeordnet sein sollen. Beispielsweise ist es möglich, das Material der Grundlage 14 an den erwünschten Stellen bzw. in den erwünschten Bereichen mit einem kohlenstoffhaltigen Material anzureichern.

In entsprechender Weise ist bei dem vorliegenden Ausführungsbeispiel auch in der Decklage 15 eine leitfähige Einlage 28 vorhanden, die beispielhaft aus drei linienförmigen Leitungen 29a, 29b, 29c besteht.

Es versteht sich, dass alternativ auch nur eine der beiden Einlagen 26, 28 vorhanden sein kann und/oder dass alternativ bei den Einlagen 26, 28 nur eine oder zwei linienförmige Leitung/en vorhanden sein kann oder dass entsprechende Mischformen vorgesehen sein können.

Mit Hilfe der leitfähigen Einlagen 26, 28 bzw. der linienförmigen Leitungen 27a, 27b, 27c, 29a, 29b, 29c wird eine elektrische Verbindung der elektrischen Schaltung 20 nach bzw. von außerhalb der Membran 10 erreicht.

Die linienförmigen Leitungen 27a, 27b, 27c, 29a, 29b, 29c der beiden leitfähigen Einlagen 26, 28 sind derart innerhalb der Grundlage 14 und der Decklage 15 angeordnet, dass eine Kontaktierung der vorgenannten Leitungen mit den Anschlussleitungen 22a, 22b, 22c aus örtlicher Sicht möglich ist. Dies kann insbesondere dadurch erreicht werden, dass die linienförmigen Leitungen 27a, 27b, 27c, 29a, 29b, 29c mit den zugehörigen Anschlussleitungen 22a, 22b, 22c zumindest teilweise einen Überlappungsbereich bilden.

Die Kontaktierung zwischen den linienförmigen Leitungen 27a, 27b, 27c, 29a, 29b, 29c und den Anschlussleitungen 22a, 22b, 22c kann durch ein Andrücken oder Zusammendrücken der Lagen 14, 15 und des dazwischen angeordneten Trägers 19 erfolgen. Alternativ oder ergänzend kann vorgesehen sein, dass in den erwähnten Überlappungsbereichen mit Hilfe eines leitfähigen Klebers eine feste Verbindung hergestellt und damit eine Kontaktierung erreicht wird.

Weiterhin sind die linienförmigen Leitungen 27a, 27b, 27c, 29a, 29b, 29c der beiden leitfähigen Einlagen 26, 28 derart innerhalb der Grundlage 14 und der Decklage 15 angeordnet, dass eine elektrische Kontaktierung derselben nach bzw. von außerhalb der Membran 10 möglich ist. Im vorliegenden Ausführungsbeispiel wird dies dadurch erreicht, dass die linienförmigen Leitungen 27a, 27b, 27c, 29a, 29b, 29c an der Oberseite der Membran 10, an der Stirnseite der Membran 10 sowie an der Unterseite der Membran 10 kontaktiert werden können. Es versteht sich, dass dabei auch nur eine einzige Kontaktierungsmöglichkeit ausreichend sein kann.

Ergänzend kann die Membran 10 mit nicht-dargestellten oberen und/oder Schutzschichten versehen sein. Diese Schutzschichten können dann an denjenigen Stellen, an denen eine elektrische Kontaktierung der linienförmigen Leitungen 27a, 27b, 27c, 29a, 29b, 29c erfolgen soll, entsprechende Öffnungen aufweisen.

Nachfolgend wird ein mögliches Verfahren zur Herstellung der Membran 10 erläutert.

Wie erläutert wurde, ist die Membran 10 aus mehreren Lagen aufgebaut, zumindest aus der Grundlage 14 und der Decklage 15. Die erwünschte Form bzw. Außenkontur der Membran 10 wird zuerst aus den jeweiligen Materialien der einzelnen Lagen ausgeschnitten. Beispielsweise wird diese Außenkontur aus dem oder den vorgesehenen Elastomeren sowie aus dem oder den vorgesehenen Gewebe-Materialien ausgestanzt.

Danach werden die einzelnen ausgeschnittenen Lagen der Membran 10 in der erwünschten Reihenfolge aufeinander aufgebaut und in ein Werkzeug, insbesondere in ein Formnest eingebracht. Im Rahmen dieser Maßnahmen, und zwar vor dem Aufbringen der Decklage 15 auf die darunter liegende Grundlage 14 der Membran 10, wird der Träger 19 mit der elektrischen Schaltung 20 eingelegt.

Der Träger 19 mit der elektrischen Schaltung 20 wird dabei unabhängig von der Membran 10 vorab hergestellt.

Zur Positionierung der Lagen 14, 15 sowie des Trägers 19 werden die Öffnungen 17, 24 verwendet.

Danach wird der in dem Werkzeug vorhandene Aufbau der Lagen der Membran 10 zusammen mit dem darin enthaltenen Träger 19 vulkanisiert.

Es versteht sich, dass auch andere Herstellverfahren für die Membran 10 denkbar sind.

## Patentansprüche

1. Membran (10) für ein Membranventil, wobei die Membran (10) mindestens zwei Lagen (14, 15) aufweist, wobei mindestens eine der mindestens zwei Lagen (14, 15) aus einem Elastomer besteht, und wobei zwischen den mindestens zwei Lagen (14, 15) eine elektrische Schaltung (20) vorhanden ist, wobei innerhalb mindestens einer der mindestens zwei Lagen (14, 15) eine leitfähige Einlage (26, 28) vorhanden ist, mit der eine elektrische Verbindung der elektrischen Schaltung (20) nach bzw. von außerhalb der Membran (10) erreichbar ist, **dadurch gekennzeichnet, dass** die elektrische Schaltung (20) eine spiralförmige Struktur (21) zur Bildung einer Antenne aufweist.

2. Membran (10) nach Anspruch 1, wobei die leitfähige Einlage (26, 28) leitfähige Partikel enthält, die in das Material der betroffenen Lage (14, 16) eingebracht sind.

3. Membran (10) nach Anspruch 2, wobei die betroffene Lage (14, 16) an der Stelle bzw. in dem Bereich der leitfähigen Einlage (26, 28) mit kohlenstoffhaltigem Material angereichert ist.

4. Membran (10) nach einem der vorstehenden Ansprüche, wobei die leitfähige Einlage (26, 28) aus mindestens einer linienförmigen Leitung (27a, 27b, 27c, 29a, 29b, 29c) besteht.

5. Membran (10) nach einem der vorstehenden Ansprüche, wobei die leitfähige Einlage (26, 28) von außerhalb der Membran (10) kontaktierbar ist.

6. Membran (10) nach einem der vorstehenden Ansprüche, wobei die elektrische Schaltung (20) auf einem Träger (19) vorhanden ist, und wobei der Träger (19) auf oder zwischen den Lagen (14, 15) angeordnet ist.

7. Membran nach Anspruch 6, wobei die elektrische Schaltung (20) aus Leiterbahnen und/oder sonstigen elektrischen Strukturen aus einem elektrisch leitfähigen Material besteht, die auf dem Träger (19) angeordnet sind.

8. Membran (10) nach einem der vorstehenden Ansprüche, wobei die Membran (10) mit oberen und/oder unteren Schutzschichten versehen ist.

9. Verfahren zur Herstellung der Membran (10) nach einem der vorstehenden Ansprüche mit den folgenden Schritten: die Außenkontur der Membran (10) wird aus den jeweiligen Materialien der einzelnen Lagen ausgeschnitten, die einzelnen ausgeschnittenen Lagen werden aufeinander aufgebaut, wobei die elektrische Schaltung (20) vor dem Aufbringen der Lage (15) auf die darunter liegende Lage (14) der Membran (10) eingelegt wird, der Aufbau der Lagen (14, 15) mit der dazwischen angeordneten elektrischen Schaltung (20) wird vulkanisiert.

## Claims

1. Diaphragm (10), wherein the diaphragm (10) comprises at least two layers (14, 15), wherein at least one of the at least two layers (14, 15) consists of an elastomer, and wherein, between the at least two layers (14, 15), an electric circuit (20) is provided, wherein in at least one of the two layers (14, 15) a conductive insert (26, 28) is provided, by means of which an electrical connection of the electric circuit (20) to or from the outside of the diaphragm (10) can be achieved, **characterized in that** the electrical circuit (20) has a spiral-shaped structure (21) constituting an antenna.

2. Diaphragm (10) according to claim 1, wherein the conductive insert (26, 28) contains conductive particles, which are introduced into the material of the relevant layer (14, 16).

3. Diaphragm (10) according to claim 2, wherein the respective layer (14, 16) is enriched with carbonaceous material at the location or in the vicinity of the conductive insert (26, 28).

4. Diaphragm (10) according to one of the preceding claims, wherein the conductive insert (26, 28) consists of at least one linear lead (27a, 27b, 27c, 29a, 29b, 29c).

5. Diaphragm (10) according to one of the preceding claims, wherein contact with the conductive insert (26, 28) can be made from the outside of the diaphragm (10).

6. Diaphragm (10) according to one of the preceding claims, wherein the electric circuit (20) is provided on a support (19), and wherein the support (19) is arranged on or between the layers (14, 15).

7. Diaphragm according to claim 6, wherein the electric circuit (20) consists of conductor paths and/or other electrical structures made of an electrically conductive material, which are arranged on the support (19).

8. Diaphragm (10) according to one of the preceding claims, wherein the diaphragm (10) is provided with upper and/or lower protective layers.

9. Method for producing the diaphragm (10) according to one of the preceding claims, comprising the following steps: The outer contour of the diaphragm (10) is cut out of the respective materials of the individual layers; the individual cut-out layers are arranged on top of one another, wherein the electric circuit (20) is inserted prior to applying the layer (15) onto the subjacent layer (14) of the diaphragm (10); the arrangement of the layers (14, 15) with the electric circuit (20) situated between them is being vulcanized.

## Revendications

1. Membrane (10) pour une soupape à membrane, dans laquelle la membrane (10) présente au moins deux couches (14, 15), dans laquelle au moins une des au moins deux couches (14, 15) est constituée d'un élastomère, et dans laquelle un circuit électrique (20) est présent entre les au moins deux couches (14, 15), dans laquelle un insert conducteur (26, 28) est présent à l'intérieur d'au moins une des au moins deux couches (14, 15), avec lequel une liaison électrique du circuit électrique (20) vers ou depuis l'extérieur de la membrane (10) peut être obtenue, **caractérisée en ce que** le circuit électrique (20) présente une structure (21) en spirale pour la formation d'une antenne.

2. Membrane (10) selon la revendication 1, dans laquelle l'insert conducteur (26, 28) contient des particules conductrices, qui sont introduites dans le matériau de la couche (14, 16) concernée.

3. Membrane (10) selon la revendication 2, dans laquelle la couche (14, 16) concernée est enrichie en matériau carboné à l'endroit ou dans la zone de l'insert conducteur (26, 28).

4. Membrane (10) selon l'une quelconque des revendications précédentes, dans laquelle l'insert conducteur (26, 28) est constitué d'au moins une conduite linéaire (27a, 27b, 27c, 29a, 29b, 29c).

5. Membrane (10) selon l'une quelconque des revendications précédentes, dans laquelle l'insert conducteur (26, 28) peut être mis en contact depuis l'extérieur de la membrane (10).

6. Membrane (10) selon l'une quelconque des revendications précédentes, dans laquelle le circuit électrique (20) est présent sur un support (19), et dans laquelle le support (19) est disposé sur ou entre les couches (14, 15).

7. Membrane selon la revendication 6, dans laquelle le circuit électrique (20) est constitué de tracés conducteurs et/ou d'autres structures électriques composés d'un matériau électro-conducteur, qui sont disposés sur le support (19).

8. Membrane (10) selon l'une quelconque des revendications précédentes, dans laquelle la membrane (10) est pourvue de couches de protection supérieures et/ou inférieures.

9. Procédé pour fabriquer la membrane (10) selon l'une quelconque des revendications précédentes avec les étapes suivantes: le contour extérieur de la membrane (10) est découpé à partir des matériaux respectifs des couches individuelles, les couches découpées individuelles sont disposées les unes sur les autres, dans lequel le circuit électrique (20) est inséré avant l'application de la couche (15) sur la couche (14), située dessous, de la membrane (10), la disposition des couches (14, 15) avec le circuit électrique (20) disposé entre celles-ci est vulcanisée.
